Europäisches Patentamt

European Patent Office

Office européen des brevets

(19)

(11) Veröffentlichungsnummer: **0 225 397 B1**

# (12) EUROPÄISCHE PATENTSCHRIFT

(45) Veröffentlichungstag der Patentschrift: **05.06.91**

(51) Int. Cl.5 **G01N 3/30**, G01N 3/36

(21) Anmeldenummer: **85115953.3**

(22) Anmeldetag: **13.12.85**

(54) Verfahren und Vorrichtung zur Erzeugung von stossartigen Belastungen an einem Prüfling.

(43) Veröffentlichungstag der Anmeldung:
**16.06.87 Patentblatt 87/25**

(45) Bekanntmachung des Hinweises auf die
Patenterteilung:
**05.06.91 Patentblatt 91/23**

(84) Benannte Vertragsstaaten:
**CH DE FR GB LI**

(56) Entgegenhaltungen:
**EP-A- 0 053 370**
**EP-A- 0 079 979**
**GB-A- 2 115 492**
**US-A- 3 823 600**

**PATENT ABSTRACTS OF JAPAN, Band 3
(M-70), 25. August 1979, Seite 39 M 70 &
JP-A-54-74979**

(73) Patentinhaber: **CARL SCHENCK AG**
**Landwehrstrasse 55 Postfach 40 18**
**W-6100 Darmstadt(DE)**

(72) Erfinder: **Beran, Josef**
**Holzgasse 46**
**W-6101 Rossdorf 1(DE)**
Erfinder: **Brezina, Jan**
**De-La-Fosse-Weg 36**
**W-6100 Darmstadt(DE)**

(74) Vertreter: **Brandt, Ernst-Ulrich**
**Fa. Carl Schenck AG Patentabteilung Land-**
**wehrstrasse 55 Postfach 40 18**
**W-6100 Darmstadt 1(DE)**

## Beschreibung

Die Erfindung betrifft ein verfahren und eine Vorrichtung zur Erzeugung von stoßartigen Belastungen an einem Prüfling, bei dem der Prüfling nach einer vorgegebenen Funktion beschleunigt und danach bis zum Stillstand verzögert wird, mit einer hydraulischen Belastungseinrichtung, die besteht aus einem hydraulischen Belastungszylinder mit einem Kolben, zwei Zylinderkammern und einer nach außen geführten, mit dem dort liegenden Prüfling verbindbaren Kolbenstange sowie einem Ventil für die Druckmittelzufuhr von einer Druckmittelquelle zum Belastungszylinder, wobei die Form der Beschleunigung durch die Steuerung der Druckmittelzufuhr zu der ersten Zylinderkammer des Belastungszylinders nachgebildet wird, und wobei in der Beschleunigungsphase der Gegendruck in der zweiten Zylinderkammer andauernd konstant gehalten wird.

verfahren und Vorrichtungen zur stoßartigen Belastung von Prüflingen werden verwendet um Beanspruchungen nachzubilden, wie sie z. B. bei Unfallvorgängen auftreten. Hierbei sollen insbesondere Beschleunigungsverläufe, z. B. halbsinusförmiger, rechteckförmiger oder sägezahnförmiger Art, oder Geschwindigkeitsverläufe nachgebildet werden. Die Versuchsdauer ist hierbei extrem kurz und liegt z. B. im Bereich von einigen Millisekunden. Die Beschleunigungen liegen zwischen etwa 5 g und 1000 g. Bei solchen Versuchen wird gefordert, daß der Prüfling nach dem Versuch, bei dem eine gewisse Endgeschwindigkeit erreicht wird, mit vorgegebener, möglichst geringer und gleichmäßiger Verzögerung wieder zum Stillstand gebracht wird.

Aus der EP-A-079979 ist ein Verfahren gemäß dem Oberbegriff des Patentanspruchs 1 bekannt.

Bei diesem bekannten Verfahren wird eine Verzögerung des Prüflings dadurch erreicht, daß der Kolben nach einer Beschleunigungsphase eine Leitungsöffnung passiert, die die Zylinderkammer mit der Druckmittelquelle verbindet.

Das in der Zylinderkammer verbleibende Druckmittel dämpft daher die Bewegung des Kolbens.

Bei einem bekannten Verfahren, bei dem der Prüfling mit einer hydraulischen Belastungseinrichtung in der gewünschten Form beschleunigt wird, ist eine Entkopplung von Prüfling und Belastungseinrichtung nach der Beschleunigung vorgesehen. Der Prüfling wird nach dem Versuch z. B. mechanisch in geeigneter Weise abgebremst. Dieses Verfahren ist unbefriedigend, wenn z. B. Versuche mit einer bestimmten Taktfolge durchgeführt werden sollen. Ähnliches gilt für Verfahren, bei denen der Prüfling im freien Fall auf eine bestimmte Geschwindigkeit beschleunigt wird und die gewünschte Beschleunigungbelastung durch Abbremsen des Prüflings durch eine Absorbervorrichtung bewirkt wird.

Es ist Aufgabe der vorliegenden Erfindung, ein Verfahren zur Erzeugung von stoßartigen Belastungen an einem Prüfling zu schaffen, das es mit einfachen Mitteln ermöglicht, unterschiedliche Beschleunigungsformen nachzubilden, wobei die nachfolgende Verzögerung möglichst konstant sein soll und vorgegebene Werte nicht überschreitet. Weiterhin soll eine Vorrichtung zur Durchführung des Verfahrens geschaffen werden. Diese Aufgabe wird durch die in den Patentansprüchen angegebenen Merkmale gelöst.

Durch die erfindungsgemäße Lösung wird die Sollwertvorgabe für die nachzubildenden Abläufe vereinfacht, da die Druckmittelzufuhr zum Belastungszylinder gesteuert werden kann. Unerwünschte Belastungsspitzen bei der Verzögerung des Prüflings werden durch den im wesentlichen konstanten Gegendruck in der Verzögerungsphase vermieden. Weiterhin kann nach dem vorgeschlagenen Verfahren taktweise gearbeitet werden.

In Ausgestaltung des Verfahrens wird es als vorteilhaft angesehen, wenn bei der Verzögerung des Prüflings die beiden Zylinderkammern des Belastungszylinders miteinander verbunden werden und wenn der Gegendruck durch einen Druckspeicher und/oder ein Druckbegrenzungsventil erzeugt wird.

Eine zweckmäßige Vorrichtung zur Durchführung des Verfahrens ergibt sich, wenn das Ventil als Steuer- und Schaltventil ausgebildet ist. das die Druckmittelquelle mit der ersten Zylinderkammer oder beide Zylinderkammern miteinander verbindet und wenn die zweite Zylinderkammer mit einem Druckspeicher und/oder einem Druckbegrenzungsventil verbunden ist. Andere vorteilhafte Ausgestaltungen des Erfindungsgedankens ergeben sich aus den weiteren Unteransprüchen.

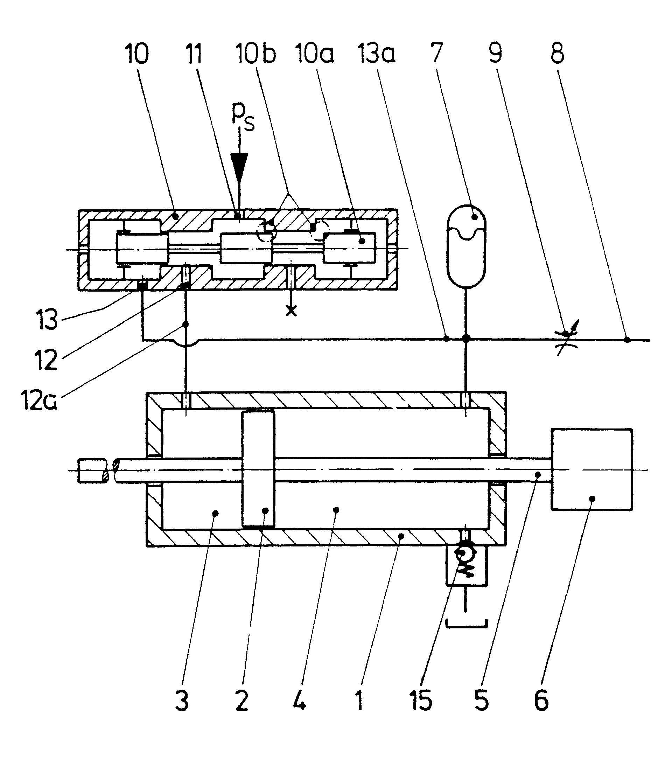

Die Erfindung wird nachstehend an einem Ausführungsbeispiel erläutert. Die Zeichnung zeigt in schematischer Darstellung eine hydraulische Belastungseinrichtung für Stoßversuche mit einem Belastungszylinder, Servoventil, Druckspeicher und Druckbegrenzungsventil.

Die hydraulische Belastungseinrichtung besteht aus einem hydraulischen Belastungszyliner 1 mit einem Kolben 2, einer ersten Zylinderkammer 3 und einer zweiten Zylinderkammer 4 sowie einer nach außen geführten Kolbenstange 5. An der Kolbenstange 5 ist ein Prüfling 6 angeordnet. Die Kolbenstange 5 kann einseitig, oder wie dargestellt, auf beiden Stirnseiten des Belastungszylinders nach außen geführt sein.

An der Zylinderkammer 4 ist eine Druckspeicher 7 angeordnet, der z. B. als Blasenspeicher ausgebildet sein kann. Der Speicher kann über die Leitung 8 und eine Drossel- oder Einstellvorrichtung 9 mit Druckmittel gefüllt und auf einen vorgegebenen Druck eingestellt werden. Er kann bei etwa konstantem Einstelldruck Druckmittel aufnehmen und abgeben.

Zur Steuerung der Druckmittelzufuhr zum Belastungszylinder 1 ist ein Servoventil 10 vorgesehen. Das Ventil arbeitet in bekannter Weise mit einem Steuerschieber 10 a und Steuerkanten 10 b am Steuerschieber und am Ventilgehäuse, wobei im vorliegenden Fall, wie nachstehend beschrieben, nur eine Ventilseite benötigt wird. Das Servoventil weist einen Druckmittelzuführungsanschluß 11 auf, der mit einer Druckmittelquelle verbunden ist, die das benötigte Druckmittel mit einem bestimmten Systemdruck $p_s$ liefert. Zwei weitere Druckmittelanschlüsse 12 und 13 dienen zur Verbindung des Servoventils mit dem Belastungszylinder 1. Der Druckmittelanschluß 12 ist über die Leitung 12 a mit der ersten Zylinderkammer 3 des Belastungszylinders verbunden, während der Anschluß 13 über die Leitung 13 a mit der zweiten Zylinderkammer 4 und dem Druckmittelspeicher 7 in Verbindung steht.

Das Servoventil 10 kann so geschaltet werden, daß entweder die erste Zylinderkammer 3 über die Leitung 12 a mit dem Systemdruck beaufschlagt wird (Darstellung in der Zeichnung), wobei das Druckmittel gesteuert zugeführt wird, oder beide Zylinderkammern 3, 4 über die Leitungen 12 a, 13 a miteinander verbunden werden (Steuerschieber 10 a nach links verschoben). Die erste Schaltstellung wird für die Beschleunigung und die zweite Schaltstellung für die Verzögerung des Prüflings 6 verwendet. Die Steuerung des Servoventils ist im einzelnen nicht dargestellt.

Am Belastungszylinder 1 ist weiterhin ein Druckbegrenzungsventil 15 angeordnet, mit dem der Maximaldruck in Zylinderkammer 4 eingestellt werden kann. Damit ist es möglich, einen unerwünschten Überdruck in dieser Zylinderkammer zu vermeiden.

Die beschriebene Belastungseinrichtung arbeitet in der folgenden Weise. Zu Beginn eines Stoßversuches befindet sich der Kolben 2 des Belastungszylinders 1 in seiner Ausgangsstellung, im dargestellten Beispiel auf der linken Seite des Belastungszylinders. Das Servoventil 10 wird geöffnet und der ersten Zylinderkammer 3 wird über die Leitung 12 a Druckmittel mit dem maximal möglichen Systemdruck $p_s$, der z. B. bei 280 bar liegen kann, zugeführt. Bei der Druckmittelzuführung wird das Servoventil so gesteuert, daß die gewünschte Beschleunigungsform erzeugt wird und an Kolben, Kolbenstange bzw. Prüfling die entsprechende Beschleunigung auftritt. Die Aussteuerung des Servoventils, d. h. die für die jeweilige Beschleunigungsform erforderliche Ventilöffnung bzw. die Steuerung der Ventilöffnung wird durch theoretische Überlegungen und/oder Versuche festgelegt. Die Beschleunigungszeiten sind sehr kurz und liegen im Millisekundenbereich. Die erzeugten Beschleunigungen können Werte von 1000 g und mehr erreichen.

Nach der Beschleunigungsphase wird das Servoventil 10 umgesteuert und so geschaltet, daß es über die Leitungen 12 a und 13 a die erste und die zweite Zylinderkammer 3, 4 miteinander verbindet und die erste Zylinderkammer 3 von der Druckmittelquelle abtrennt. In der Zylinderkammer 4 und in dem angeschlossenen Druckspeicher 7 herrscht während des gesamten Versuchs ein verhältnismäßig niedriger, im wesentlichen konstanter Druck. Beispielsweise kann der Druck im Druckspeicher etwa 10% des Systemdrucks betragen, bei einem Systemdruck von 280 bar also z. B. etwa 25 bar. Dieser Druck reicht nach Beendigung der Beschleunigungsphase wegen der hohen augenblicklichen Geschwindigkeit des Kolbens 2 nicht aus, um schnell einen Druckausgleich zwischen den beiden Kammern des Belastungszylinders herbeizuführen. Die Zylinderkammer 3 bleibt daher trotz der Verbindung mit Zylinderkammer 4 zunächst praktisch drucklos. Der Kolben 2 kann aus diesem Grund durch den etwa konstanten Gegendruck in Zylinderkammer 4 definiert abgebremst werden.

Das Servoventil 10 wird im Verlauf der Verzögerungsphase so gesteuert, daß sich ein Druckausgleich in den beiden Zylinderkammern ergibt, wenn der Kolben 2 bis zum Stillstand abgebremst ist. Die Ansteuerung des Servoventils 10 bzw. die Ventilöffnung wird wieder durch theoretische Überlegungen und/oder praktische Versuche festgelegt. Durch den gesteuerten Kurzschluß der beiden Zylinderkammern des Belastungszylinders wird das Druckmittel in der Verzögerungsphase von Zylinderkammer 4 in Zylinderkammer 3 umgepumpt. Überschüssiges Druckmittel kann im Druckspeicher 7 aufgenommen oder über das Druckbegrenzungsventil 15 abgeführt werden.

Wenn das Druckbegrenzungsventil 15 so ausgebildet ist, daß es schnell anspricht und die erforderliche Druckkonstanz in Zylinderkammer 4 gewährleistet, kann der Druckspeicher 7 entfallen. Die bei Versuchen erzeugte kinetische Energie wird in diesem Fall nicht im Druckspeicher aufgenommen, sondern im Druckbegrenzungsventil vernichtet.

Bei dem geschilderten Stoßversuch beträgt der Kolbenweg in der Beschleunigungsphase nur ein Bruchteil des Weges in der Verzögerungsphase.

Anstelle des Servoventils kann bei dem Verfahren und der Vorrichtung nach der Erfindung auch ein Proportionalventil oder ein ähnlich arbeitendes Schaltventil verwendet werden, mit dem die beschriebenen Schalt- und Steuervorgänge ausführbar sind.

Zur Rückführung des Kolbens 2 in die Ausgangsstellung für einen Stoßversuch ( in der Zeichnung von der rechten in die linke Endstellung) kann z. B. die Kolbenfläche in der ersten Zylinderkammer 3 etwas kleiner gewählt werden als in der zweiten Zylinderkammer 4. Dadurch bewegt sich der Kolben nach dem Druckausgleich in den beiden Zylinderkammern am Ende eines Vesuchs selbsttätig in die Ausgangsstellung zurück. Bei vertikaler Anordnung des Belastungszylinders bewegt sich der Kolben aufgrund der Erdbeschleunigung ebenfalls selbsttätig in seine Ausgangsstellung, wenn die Anordnung so gewählt wird, daß sich die erste Zylinderkammer 3 unten und die zweite Zylinderkammer 4 oben befindet. Auch andere Arten der Kolbenrückführung, z. B. mit mechanischen Mitteln, sind möglich.

**Ansprüche**

1. Verfahren zur Erzeugung von stoßartigen Belastungen an einem Prüfling (6), bei dem der Prüfling (6) nach einer vorgegebenen Funktion beschleunigt und danach bis zum Stillstand verzögert wird, mit einer hydraulischen Belastungseinrichtung, die besteht aus einem hydraulischen Belastungszylinder (1) mit einem Kolben (2), zwei Zylinderkammern (3, 4) und einer nach außen geführten, mit dem dort liegenden Prüfling (6) verbindbaren Kolbenstange (5) sowie einem Ventil (10) für die Druckmittelzufuhr von einer Druckmittelquelle zum Belastungszylinder (1), wobei die Form der Beschleunigung durch die Steuerung der Druckmittelzufuhr zu der ersten Zylinderkammer (3) des Belastungszylinders (1) nachgebildet wird, und wobei in der Beschleunigungsphase der Gegendruck in der zweiten Zylinderkammer (4) andauernd konstant gehalten wird, dadurch gekennzeichnet, daß in der Beschleunigungsphase die erste Zylinderkammer (3) durch die Druckmittelquelle mit höherem Druck als dem Gegendruck in der zweiten Zylinderkammer beaufschlagt wird, und daß nur in der Verzögerungsphase die beiden Zylinderkammern (3, 4) des Belastungszylinders (1) durch das Ventil (10) miteinander verbunden werden, und daß in der Verzögerungsphase die erste Zylinderkammer (3) von der Druckmittelquelle abgetrennt wird und dadurch zunächst angenähert drucklos bleibt und daß der Kolben (2) des Belastungszylinders (1) bzw. der Prüfling (6) durch den konstanten Gegendruck in der zweiten Zylinderkammer (4) mit einer im wesentlichen konstanten Verzögerung bis zum Stillstand abgebremst wird.

2. Verfahren nach Anspruch 1, dadurch gekennzeichnet, daß der Gegendruck durch einen Druckspeicher (7) oder ein Druckbegrenzungsventil (15) erzeugt wird.

3. Vorrichtung zur Erzeugung von stoßartigen Belastungen an einem Prüfling (6), mit einer hydraulischen Belastungseinrichtung, die besteht aus einem hydraulischen Belastungszylinder (1) mit einem Kolben (2), zwei Zylinderkammern (3, 4) und einer nach außen geführten, mit dem dort liegenden Prüfling (6) verbindbaren Kolbenstange (5) sowie einem Ventil (10) für die Druckmittelzufuhr von einer Druckmittelquelle zum Belastungszylinder (1), zur Durchführung des Verfahrens nach Anspruch 1, worin das Ventil (10) als Steuer- und Schaltventil ausgebildet ist, worin die Druckmittelquelle in der Beschleunigungsphase mit der ersten Zylinderkammer (3) verbunden ist, dadurch gekennzeichnet, daß die zweite Zylinderkammer (4) ständig mit einem Druckspeicher (7) und/oder einem Druckbegrenzungsventil (15) verbunden ist, daß nur in der Verzögerungsphase beide Zylinderkammern (3, 4) miteinander verbunden sind, und daß in der Verzögerungsphase die erste Zylinderkammer (3) von der Druckmittelquelle abgetrennt ist und dadurch zunächst angenähert drucklos bleibt.

4. Vorrichtung nach Anspruch 3, dadurch gekennzeichnet, daß das Steuer- und Schaltventil als Servoventil (10) oder Proportionalventil ausgebildet ist.

5. Vorrichtung nach Anspruch 3 oder 4, dadurch gekennzeichnet, daß am Belastungszylinder (1) eine Vorrichtung zur Rückführung des Kolbens (2) in seine Ausgangsstellung vorgesehen ist.

6. Vorrichtung nach Anspruch 3 oder 4, dadurch gekennzeichnet, daß die Kolbenfläche der ersten Zylinderkammer (3) geringfügig kleiner als die Kolbenfläche der zweiten Zylinderkammer (4) ausgebildet ist.

7. Vorrichtung nach einem der Ansprüche 3 bis 6, dadurch gekennzeichnet, daß der Druck des Druckspeichers (7) einstellbar ist.

**Claims**

1. A method of producing impact loading on a specimen (6), in which the specimen (6) is accelerated according to a predetermined function and is then decelerated to a standstill, having an hydraulic loading device which consists of an hydraulic loading cylinder (1) with a piston (2), two cylinder chambers (3,4) and an outwardly guided piston rod (5) which may be connected to the specimen (6) lying there and having a valve (10) for the supply of pressure medium from a pressure medium source to the loading cylinder (1), in which the form of the acceleration is simulated by the control of the pressure medium supply to the first cylinder chamber (3) of the loading cylinder (1), and in which in the acceleration phase the counter pressure is held permanently constant in the second cylinder chamber (4), **characterised in that** in the acceleration phase the first cylinder chamber (3) is acted upon by the pressure medium source at a higher pressure than the counter pressure in the second cylinder chamber, and that only in the deceleration phase are the two cylinder chambers (3,4) of the loading cylinder (1) connected together by the valve (10), and that in the deceleration phase the first cylinder chamber (3) is separated off from the pressure medium source and as a result initially remains approximately pressure-less and that the piston (2) of the loading cylinder (1) or the test piece (6) respectively is braked by the constant counter pressure in the second cylinder chamber (4) with a deceleration to a standstill which is essentially constant.

2.  A method according to claim 1, **characterised in that** the counter pressure is produced by a pressure reservoir (7) or a pressure limiting valve (15).

3.  A device for producing impact loading on a specimen (6) having an hydraulic loading device which consists of an hydraulic loading cylinder (1) with a piston (2), two cylinder chambers (3,4) and a piston rod (5) connectible to the specimen (6) lying there and guided outwards and having a valve (10) for the pressure medium supply from a pressure medium source to the loading cylinder (1), for carrying out the method according to claim 1, in which the valve (10) is formed as a control and switching valve in which the pressure medium source is connected to the first cylinder chamber (3) in the acceleration phase, **characterised in that** the second cylinder chamber (4) is always connected to a pressure reservoir (7) and/or a pressure limiting valve (15), that only in the deceleration phase two cylinder chambers (3,4) are connected together, and that in the deceleration phase the first cylinder chamber (3) is separated off from the pressure medium source and as a result initially remains almost pressure-less

4.  A device according to claim 3, **characterised in that** the control and switching valve is formed as a servo valve (10) or proportional valve.

5.  A device according to claim 3 or 4, **characterised in that** a device for the return of the piston (2) into its starting position is provided on the loading cylinder (1).

6.  A device according to claim 3 or 4, **characterised in that** the piston surface of the first cylinder chamber (3) is slightly smaller than the piston surface of the second cylinder chamber (4).

7.  A device according to any one of claims 3 to 6, **characterised in that** the pressure of the pressure reservoir (7) is adjustable.

**Revendications**

1.  Procédé destiné à produire des sollicitations sous forme de chocs sur une éprouvette (6), dans lequel l'éprouvette (6) est accélérée suivant une fonction donnée puis ralentie jusqu'à l'arrêt, avec un dispositif hydraulique de charge qui est constitué d'un cylindre de charge (1) hydraulique avec un piston (2), deux chambres de cylindre (3, 4) et une tige de piston (5) guidée vers l'extérieur, pouvant être reliée à l'éprouvette (6) située à cet endroit ainsi qu'avec une vanne (10) pour l'arrivée d'un fluide sous pression, depuis une source de fluide sous pression jusqu'au cylindre de charge (1), la forme de l'accélération étant simulée par la commande de l'arrivée de fluide sous pression à la première chambre de cylindre (3) du cylindre de charge (1) et la contre-pression étant maintenue en permanence constante, dans la deuxième chambre de cylindre (4), pendant la phase d'accélération, caractérisé en ce que pendant la phase d'accélération, la première chambre de cylindre (3) est alimentée par la source de fluide sous pression à une pression supérieure à la contre-pression régnant dans la deuxième chambre de cylindre et en ce que, pendant la phase de ralentissement seulement, les deux chambres de cylindre (3, 4) du cylindre de charge (1) sont reliées entre elles par la vanne (10) et en ce que, pendant la phase de ralentissement, la première chambre de cylindre (3) est séparée de la source de fluide sous pression et reste donc ainsi tout d'abord, à peu près sans pression, et en ce que le piston (2) du cylindre de charge (1) ou l'éprouvette (6) est freiné, jusqu'à l'arrêt, par la contre-pression constante régnant dans la deuxième chambre de cylindre (4), avec un ralentissement à peu près constant.

2. Procédé selon la revendication 1, caractérisé en ce que la contre-pression est produite par un accumulateur de pression (7) ou par une vanne de limitation de pression (15).

3. Dispositif destiné à produire des sollicitations sous forme de chocs sur une éprouvette (6), dans lequel l'éprouvette (6) est accélérée suivant une fonction donnée puis ralentie jusqu'à l'arrêt, avec un dispositif hydraulique de charge qui est constitué d'un cylindre de charge (1) hydraulique avec un piston (2), deux chambres de cylindre (3, 4) et une tige de piston (5) guidée vers l'extérieur, pouvant être reliée à l'éprouvette (6) située à cet endroit ainsi qu'avec une vanne (10) pour l'arrivée d'un fluide sous pression, depuis une source de fluide sous pression jusqu'au cylindre de charge (1), pour la mise en oeuvre du procédé selon la revendication 1, dans lequel la vanne (10) sert de vanne de commande et de commutation, dans lequel la source de fluide sous pression est reliée à la première chambre de cylidnre (3), pendant la phase d'accélération, caractérisé en ce que la deuxième chambre de cylindre (4) est reliée en permanence à un accumulateur de pression (7) et/ou à une vanne de limitation de pression (15), en ce que, pendant la phase de ralentissement seulement, les deux chambres de cylindre (3, 4) sont reliées entre elles et en ce que, pendant la phase de ralentissement, la première chambre de cylindre (3) est séparée de la source de fluide sous pression et reste donc ainsi, tout d'abord, à peu près sans pression.

4. Dispositif selon la revendication 3, caractérisé en ce que la vanne de commande et de commutation est une servo-vanne (10) ou une vanne proportionnelle.

5. Dispositif selon la revendication 3 ou 4, caractérisé en ce qu'il est prévu sur le cylindre de charge (1), un dispositif de rappel du piston (2) dans sa position initiale.

6. Dispositif selon la revendication 3 ou 4, caractérisé en ce que la surface de piston de la première chambre de cylindre (3) est légèrement inférieure à la surface de piston de la deuxième chambre de cylindre (4).

7. Dispositif selon l'une des revendications 3 à 6, caractérisé en ce que la pression de l'accumulateur de pression (7) est réglable.